# EUROPÄISCHE PATENTSCHRIFT

(11) **EP 1 129 967 B1**
(45) Veröffentlichungstag und Bekanntmachung des Hinweises auf die Patenterteilung: **21.01.2004**
(21) Anmeldenummer: 01103940.1
(22) Anmeldetag: 19.02.2001
(51) Int. Cl.: B65G 47/90, B65G 61/00, B65B 69/00

(54) **Greifersystem zur automatischen Entnahme von Stangen flacher Güter aus einer Transportverpackung**
Gripping system for automatic removal of stacks of flat articles from a transport package
Système de préhension pour l' enlèvement automatique des objets plats en piles d' un emballage de transport

(30) Priorität: 02.03.2000 DE 10010100
(43) Veröffentlichungstag der Anmeldung: 05.09.2001
(73) Patentinhaber: FPT Robotik GmbH & Co., 88279 Amtzell (DE)
(72) Erfinder: Müller, Hermann, 88276 Berg (DE); Steinhauser, Dieter, 88287 Grünkraut (DE)
(74) Vertreter: KOHLER SCHMID + PARTNER

(56) Entgegenhaltungen:
- EP-A- 0 224 678
- EP-A- 0 629 573
- FR-A- 2 556 701

## Beschreibung

Die Erfindung betrifft ein Greifersystem zum Greifen von flachen, in einer längs einer y-Richtung ausgerichteten, stangenförmigen Aneinanderreihung angeordneten Gütern, insbesondere vorgeklebten, flachliegenden Faltschachteln, mit Antriebs- und Führungselementen für eine Halteeinrichtung, die in y-Richtung und in mindestens einer x-Richtung senkrecht zur y-Richtung eine definierte Kraft auf die stangenförmig aneinander gereihten, flachen Güter ausüben kann, wobei die in y-Richtung wirkenden Elemente der Halteeinrichtung linear parallel zur y-Richtung verfahrbar sind und die in x-Richtung wirkenden Elemente ein Paar von Seitenflügeln umfassen, die auf zwei gegenüberliegenden Seiten bezüglich einer y-Achse der Vorrichtung angeordnet sind,

Ein solches Greifersystem ist bekannt aus der US-A 4,943,206.

Die Entnahme von verpackten Gütern, insbesondere im Bereich der Faltschachtelzuschnitte, ist bereits seit einiger Zeit vollautomatisiert möglich. So beschreibt beispielsweise die DE 196 35 433 A1 eine Vorrichtung zum automatischen Überführen von flachfliegenden Faltschachtelzuschnitten aus einer Umverpackung in eine Zuführeinrichtung einer Kartoniermaschine. In einer automatisierten Entnahmeeinrichtung werden die meist in mehreren Lagen übereinanderliegend verpackten flachliegenden Faltschachtelzuschnitte, die durch Zwischenböden getrennt sind, aus einer hülsenförmigen, oben und unten offenen Umverpackung entnommen. Dazu werden die übereinander gestapelten Lagen von unten her relativ zur Umverpackung mit Hilfe einer Hubeinrichtung angehoben. Sobald die oberste Lage mit ihrem zugehörigen Zwischenboden jeweils oberhalb der Oberkante der Umverpackung angekommen ist, wird die gesamte Lage auf ein Förderband seitlich abgeschoben und von der Umverpackung in horizontale Richtung entfernt.

Als Voraussetzung für diese automatisierte Entnahme muß allerdings eine hülsenförmige Umverpackung mit speziell ausgebildeten Zwischenböden verwendet werden. Der Öffnungsvorgang der Umverpackung vor dem automatisierten Entnahmevorgang ist relativ kompliziert und derzeit nur manuell durchführbar. Dabei ist zu beachten, daß der trotz der unten und oben offenen Hülse, die oft auch aus einer Kunststoffolie besteht, keine verpackten Teile herausfallen sollen.

Ebenso komplex und derzeit nur schwer automatisierbar ist umgekehrt der Aufrichte- und Befüllvorgang, bei dem die gleichen Probleme in der zeitlich umgekehrten Reihenfolge auftreten. Außerdem müssen bei unterschiedlichen Formaten der Umverpackung nach der aus der DE 196 35 433 A1 bekannten Technik unterschiedliche Vorrichtungen mit entsprechend ausgelegten Hubeinrichtungen benutzt werden, um eine paßgenaue Relativbewegung der gesamten Lagen gegenüber der geöffneten Umverpackung zu bewirken. Auch die Entnahme der Zwischenböden erfolgt durch separate, eigens dafür zugerichtete Vorrichtungen. Schließlich bleibt am Ende des automatisierten Entnahmevorgangs die Entsorgung der leeren Umverpackung, die derzeit mittels einer relativ aufwendigen Entsorgungseinrichtung zur Entfernung der leeren Hülse realisiert wird.

Besonders nachteilig bei der bekannten Vorrichtung ist jedoch die Entnahme der Faltschachtelzuschnitte mittels eines Förderbandes. Dadurch können die ursprünglich in Stangen aneinander angereihten Faltschachteln bestenfalls flachliegend in Schuppenform weitertransportiert werden, so dass die relativ geschickt zu handhabenden Stangen als solche verlorengehen. Außerdem ist durch die Benutzung eines Förderbandes die Wahl des Zielortes extrem eingeschränkt, da normale Förderbänder üblicherweise nicht in jede beliebige Richtung geschwenkt und zu jedem beliebigen Zielort hin verlängert oder verkürzt werden können.

Eine erhebliche Verbesserung bietet demgegenüber ein in der
DE 197 20 710 C2 beschriebenes Greifersystem, das für die Entnahme von flachliegenden Faltschachteln aus einer Transportverpackung hergerichtet ist. Dabei wird in einer Halterichtung eine flächige Saugeinheit eingesetzt, die eine Unterdruckerzeugung in einer zur y-Richtung senkrechten z-Richtung aufweist. Durch einen solchen Sauggreifer läßt sich eine schonende, sichere Transporthalterung der Faltschachtelstange erreichen. Durch Ankoppelung dieses bekannten Greifersystems an ein Positioniersystem, insbesondere an eine Roboterzelle können die entnommenen Stangen von Faltschachteln praktisch zu beliebigen Stellen transportiert werden.

Nachteilig bei dem bekannten Greifersystem ist allerdings, daß zwingend eine Einrichtung zur Erzeugung von Unterdruck erforderlich ist, um die flächige Saugeinheit in der Halterichtung wirksam werden zu lassen. Da der Unterdruck in der Regel nicht am Greifersystem selbst erzeugt werden kann, muß also von einer entfernten Stelle her eine Saugleitung zum Greifersystem installiert werden, die entsprechend flexibel und beweglich gestaltet sein muß, damit der Greifer vom Positioniersystem tatsächlich alle beliebigen gewünschten Zielorte transportiert und dabei stets der erforderliche Unterdruck für das Wirksamwerden der Saugeinrichtung bereitgehalten werden kann.

Aus der US-A 4,538,511 ist demgegenüber ein einfacheres, lediglich mit mechanischen Halteeinrichtungen ausgestattetes Greifersystem bekannt, mit welchem ebenfalls stangenförmige Aneinanderreihungen flacher Güter wie Faltschachteln aus Behältnissen entnommen und transportiert werden können. Bei diesen Behältnissen handelt es sich allerdings nicht um einen Umkarton, wie er üblicherweise als Transportverpackung für Faltschachteln verwendet wird, sondern um speziell zugerichtete, seitlich offene Behälter in einem automatisierten Transportsystem. Ein Herausnehmen einer Faltschachtelstange aus einem üblichen Umkarton ist mit dem bekannten System nicht möglich.

Aus der oben zitierten US-A 4,943,206 ist ein Greifersystem mit den eingangs beschriebenen Merkmalen bekannt, welches dazu dienen soll, flachliegende Faltschachteln automatisch aus einem Umkarton zu entnehmen und einer Kartonverpackungsmaschine zuzuführen. Dazu fährt das gesamte Greifersystem in z-Richtung von oben her auf eine bestimmte Position relativ zu der aus der Umverpackung zu entnehmenden Stange von flachen Gütern, sodann fahren in einer Linearbewegung die beiden gegenüberliegenden Seitenflügel in x- bzw. in -x-Richtung in spezielle Ausnehmungen der flachen Güter in deren Randkontur ein, so dass Teile der Seitenflügel in Eingriff mit den flachen Gütern stehen, woraufhin dann das gesamte Greifersystem wiederum in z-Richtung angehoben wird und die ergriffene Stange von flachen Gütern an ihren Zielort transportiert wird.

Nachteilig bei dieser bekannten Vorrichtung ist einerseits, dass sie nur funktioniert, wenn die flachen Güter eine Randkontur mit ganz speziellen Anforderungen aufweisen, wobei kaum Möglichkeiten einer Anpassung an unterschiedliche Formate bestehen, und andererseits eine sehr genaue Positionierung des gesamten Greifersystems in z-Richtung erfolgen muß, damit die entsprechenden Teile der Seitenflügel überhaupt die Ausnehmungen in der Randkontur der flachen Güter treffen können. Außerdem benötigt die bekannte Vorrichtung einen relativ großen Raum längs der x-Achse, um die oben beschriebene Linearbewegung der Seitenflügel beidseitig ausführen zu können. Weiterhin nachteilig ist bei dem bekannten Greifersystem, dass die herausgenommenen Stangen von flachen Gütern in z-Richtung nicht aktiv gerichtet werden können, sondern lediglich aufgrund ihrer Schwerkraftskomponente in z-Richtung an den Seitenflügeln hängen. Schließlich ist auch von Nachteil, daß eine automatische Entnahme mehrerer in z-Richtung übereinander angeordneter Stangen der flachen Güter zumindest dann nicht möglich ist, wenn Zwischenlagen, Blister oder andere Teile der Umverpackung die Stangen in z-Richtung voneinander trennen. Auch ist mit dem bekannten Greifersystem eine Entfernung nicht mehr benötigter Teile der Umverpackung aus dem Entnahmebereich nicht vorgesehen.

Aufgabe der vorliegenden Erfindung ist es daher, ein Greifersystem der eingangs genannten Art vorzustellen, das mit möglichst einfachen technischen Mitteln so modifiziert ist, daß es auch ohne spezielle Anforderungen an die Randkontur der flachen Güter und mit hoher Format-Variabilität die automatische Entnahme von Stangen der flachen Güter aus einer geöffneten Umverpackung sowie deren schonenden und herausfallsicheren Transport an einen beliebigen Zielort in der näheren Umgebung ermöglicht, wobei auch der Entnahme im Weg stehende Teile der Umverpackung, wie etwa Deckel, Zwischenlagen, Blister etc. den vollautomatischen Entnahmevorgang nicht beeinträchtigen sollen, und wobei die Möglichkeit zur Entfernung nicht mehr benötigter Teile der Umverpackung gegeben sein soll.

Erfindungsgemäß wird diese Aufgabe dadurch gelöst, dass die in x-Richtung wirkenden Elemente um eine zur y-Richtung parallele Achse verschwenkbar sind, und nach einem entsprechenden Verschwenken jeweils eine in x-Richtung bzw. in x-Richtung wirkende Kraft auf die Stange aus flachen Gütern ausüben können, dass die Seitenflügel unabhängig von den in y-Richtung wirkenden Elementen der Halteeinrichtung längs einer zur y- und zur x-Richtung senkrechten z-Achse linear verfahrbar und in mindestens zwei axialen Stellungen längs der z-Richtung feststellbar sind, dass die Seitenflügel so ausgebildet sind, dass sie auch in z-Richtung eine Kraft auf die Stange aus flachen Gütern ausüben können, welche unabhängig von der in z-Richtung wirkenden Gewichtskraft der Stange aus flachen Gütern ist, und dass die Seitenflügel eine in z-Richtung wirkende Greifeinheit umfassen, mit der beispielsweise eine die Stange aus flachen Gütern nach oben hin abdeckende Zwischenlage und/oder eine Umverpackung bzw. Transportverpackung und/oder ein Blister gegriffen werden kann.

Durch das erfindungsgemäß zugerichtete Greifersystem kann, nachdem der Deckel der Umverpackung entfernt und die entsprechenden Seitenflächen der Umverpackung aufgeschnitten bzw. gelöst wurden, eine stangenweise Entnahme der verpackten flachen Güter problemlos vollautomatisiert erfolgen. Durch Entfernen von Zwischenlagen oder Deckelteilen der zu entleerenden Umverpackung kann in z-Richtung der Weg von oben her für eine Entleerung der Umverpackung für das erfindungsgemäße Greifersystem freigemacht werden. Eine vollständige automatische Demontage der Umverpackung kann entweder nach dem Entleeren derselben oder synchron mit dem Entleervorgang durch entsprechendes Lösen weiterer Befestigungsmittel, beispielsweise Aufschneiden, Entklammern etc. und Verschwenken der jeweiligen Flächen erfolgen.

Vorteilhaft bei der erfindungsgemäßen automatischen Entnahmevorrichtung ist auch, daß es beispielsweise keiner speziellen Trennfinger zum Entnehmen der verpackten Güter aus der Umverpackung bedarf. Außerdem kann die erfindungsgemäße Vorrichtung gleichmäßig in x-Richtung und in der zugehörigen Gegenrichtung eine dosierbare Haltekraft auf die Stange von flachen Gütern ausüben, wobei aufgrund der erfindungsgemäß vorgesehenen Verschwenkbewegung der Seitenflügel (anstelle einer Linearbewegung in x-Richtung) ein platzsparendes Greifen in verschiedenen Höhen (also z-Positionen) ermöglicht wird, ohne dass die Seitenflügel in ihren Extrempositionen zuviel Platz in x-Richtung beanspruchen. Des weiteren ist damit ein Ausrichten der Stange vor der eigentlichen Entnahme möglich. Während des Transports der entnommenen Stange ist durch den Formschluß der Seitenflügel ein Herausfallen von Gütern aus der Stange in x- oder -x-Richtung sowie auch aufgrund der aktiven Krafteinleitung in z-Richtung sicher verhindert. Durch die mindestens zwei axialen Stellungen der Seitenflügel in z-Richtung unabhängig von den in y-Richtung wirkenden Teilen der Halteeinrichtung kann ein Einschwenken der Seitenflügel während des Richtvorganges der Stange sowie nach dem Verfahren ein Formschluß in z-Richtung zur Stange hin bewirkt werden.

Aufgrund der Möglichkeit, die Seitenflügel in z-Richtung unabhängig von den in y-Richtung wirkenden Elementen der Halteeinrichtung zu verschieben, können die Seitenflügel also neben der Umgreif- und Sicherungsfunktion auch eine Richtfunktion in Bezug auf die Stange von flachen Gütern ausüben. Die aktive Krafteinleitung in z-Richtung unabhängig von der entsprechenden Schwerkraftkomponente der flachen Güter ermöglicht auch ein Ausrichten der Stange in z-Richtung sowie ein hohes Maß an Variabilität des erfindungsgemäßen Greifersystems hinsichtlich der Außenkontur der zu entnehmenden Güter.

Ein verschwenkbares, seitlich in Ausnehmungen der Randkontur von flachen Gütern eingreifendes Element als solches ist an sich bekannt aus der DE 42 08 450 A1. Dort ist eine Vorrichtung zum Beschicken einer Verpackungsmaschine mit Faltschachteln aus Magazinen beschrieben, die ebenso wie die Vorrichtung nach der oben zitierten US-A 4,943,206 nur bei speziell geformten Faltschachteln mit genau definierter Randkontur, insbesondere mit Ausnehmungen an genau vordefinierten Stellen funktioniert. Im Gegensatz zum Greifersystem gemäß der vorliegenden Erfindung, bei welchem zwei bezüglich der y-Achse gegenüberliegende verschwenkbare Seitenflügel zum Ergreifen der Stange aus flachen Gütern in x- bzw. in -x-Richtung vorgesehen sind, wird bei der bekannten Vorrichtung gemäß der DE 42 08 405 A1 ein asymmetrischer Aufbau vorgeschlagen, bei dem ein verschwenkbarer Seitenflügel lediglich von einer Seite in x-Richtung in eine entsprechende Ausnehmung der Randkontur der zu ergreifenden Faltschachteln eingeschwenkt wird.

Bei einer Weiterbildung der erfindungsgemäßen Vorrichtung können die Seitenflügel abgewinkelte Haltebacken aufweisen, mit denen sie in z-Richtung eine Haltekraft auf die Stange aus flachen Gütern ausüben. Dadurch kann mit technisch besonders einfachen Mitteln auch ein Herausfallen der gegriffenen flachen Güter in z-Richtung beim Wegbewegen der ergriffenen Stange sicher verhindert werden.

Besonders flexibel im Hinblick auf verschieden Außenkonturen der zu verarbeitenden flachen Güter ist eine Ausführungsform der Erfindung, bei der die Seitenflügel eine Verstelleinrichtung für unterschiedliche Formate der zu demontierenden Verpackungen aufweisen. Dadurch kann sogar ohne Austausch von Werkzeugen bei einem Formatwechsel durch entsprechende Verstellungen unmittelbar weitergearbeitet werden.

Eine besonders elegante Möglichkeit zur Realisierung des erfindungsgemäßen Greifersystems besteht darin, dass die Greifeinheit eine Saugvorrichtung aufweist, die an ein System zur Erzeugung von Unterdruck angeschlossen ist, und mit der insbesondere eine Zwischenlage in z-Richtung angesaugt und gehalten werden kann. Speziell kann bei Weiterbildungen der Sauggreifer Saugnäpfe zum Erfassen der Zwischenlage aufweisen, mit denen eine besonders zielgenaue Positionierung der Verbindungsstelle zwischen Greifer und Außenfläche der Umverpackung ermöglicht wird.

Saugvorrichtungen als solche in Zusammenhang mit Greifersystemen sind an sich aus dem Stand der Technik bekannt. So beschreiben beispielsweise die US-A 5,984,623 und die DE 37 18 601 A1 Greifersysteme für Faltschachtelzuschnitte, die zwar an demselben Greiferkopf, nicht aber an den Seitenflügeln eine Saugvorrichtung aufweisen, mit der eine Zwischenlage gegriffen werden kann.

Alternativ oder ergänzend kann bei anderen Ausführungsformen des erfindungsgemäßen Greifersystems die Greifereinheit zumindest einen mechanischen Greifer aufweisen, der insbesondere die Zwischenlage umfassen und mittels Andruck halten kann. Ein mechanischer Greifer für Zwischenlagen ist an sich aus der bereits oben zitierten DE 196 35 433 A1 bekannt.

Ebenfalls alternativ oder ergänzend kann bei Weiterbildungen die Greifeinheit zumindest einen Bohrgreifer aufweisen, der eine Zwischenlage anbohren, hintergreifen und die Zwischenlage halten kann.

Eine weitere alternative oder ergänzende Weiterbildung der erfindungsgemäßen Vorrichtung sieht vor, daß Teile der Umpackung, insbesondere die Zwischenlagen magnetisches oder magnetisierbares Material, vorzugsweise in Form von in den Flächen eingearbeiteten Fasern oder Plättchen enthalten, und daß die Greifeinheit zumindest einen Magnetgreifer aufweist, der diese Teile magnetisch anziehen und halten kann.

Eine besonders vorteilhafte Ausführungsform der erfindungsgemäßen Vorrichtung zeichnet sich dadurch aus, dass die in y-Richtung wirkenden Elemente ein Paar von bezüglich der z-Achse gegenüberliegend angeordneten Greifbacken umfassen, die längs einer y-Achse linear verfahrbar sind und in mindestens zwei axialen Stellungen bezüglich der y-Richtung feststellbar sind. Damit läßt sich besonders einfach ein Vorkomprimieren und ein anschließendes Komprimieren der Stange aus flachen Gütern vor dem eigentli- chen Entnehmen aus der Umverpackung bewirken, wodurch die Zuverlässigkeit und Reproduzierbarkeit des Entnahmevorgangs weiter erhöht wird.

Bevorzugt ist eine Weiterbildung dieser Ausführungsform, bei der die Greifbacken Halteteile aufweisen, die um eine Achse parallel zur x-Richtung verschwenkbar sind. Insbesondere können die gegenüberliegenden Halteteile in einer parallelen oder um die x-Richtung verdrehten Stellung eine Kraft in y-Richtung auf die Stange aus flachen Gütern ausüben. Beim Ablegen kann damit eine beliebige Schuppenlage der flachen Güter erzeugt werden. Aus der DE 24 40 199 A1 ist ein Greifersystem mit schwenkbaren und linear verfahrbaren Greifbacken bzw. Halteteilen entnehmbar, welches aber im übrigen keine weiteren Ähnlichkeiten mit dem erfindungsgemäßen Greifersystem aufweist.

Vorteilhaft ist es auch, wenn die Halteteile der Greifbacken um ein nach Art eines Koppelvierecks aufgebautes Hebelwerk verschwenkbar gelagert sind. Beim Ausfallen der Kraftzufuhr zum erfindungsgemäßen Greifersystem herrscht dann eine Selbsthemmung, so daß bereits ergriffene Güter auch weiterhin sicher gehalten werden.

Ganz besonders bevorzugt ist eine Weiterbildung, bei der die Halteteile jedes Greifbackens gesondert und unabhängig von denen eines anderen Greifbackens verschwenkbar sind. Dieser weitere Freiheitsgrad in der erfindungsgemäßen Vorrichtung ermöglicht vor allem beim Ablegen der Stange aus flachen Gütern nicht nur die Erzeugung einer beliebigen Schuppenlage, sondern auch die Vorgabe der entsprechenden Schuppenrichtung je nach den Bedürfnissen des konkreten Anwendungsfalles.

Eine weitere bevorzugte Ausführungsform der erfindungsgemäßen Vorrichtung zeichnet sich dadurch aus, daß eine in z-Richtung linear verfahrbare oder um eine Achse parallel zur x-Richtung verschwenkbare Druckplatte vorgesehen ist, mit der gegen eine gegriffene Stange aus flachen Gütern Druck in z-Richtung ausgeübt werden kann. Mit dieser Druckplatte wird die Stange aus flachen Gütem beim Entladen niedergedrückt, um aus dem Greifersystem entfernt zu werden. Außerdem kann damit die Möglichkeit des definierten Ablegens der Stange aus flachen Gütern in Schuppenform noch weiter verbessert werden.

Ganz besonders bevorzugt ist eine Weiterbildung dieser Ausführungsform, bei der die Druckplatte auf ihrer im entsprechenden Betriebszustand der Stange aus flachen Gütern zugewandten Seite eine Saugvorrichtung aufweist, die an ein System zur Erzeugung von Unterdruck angeschlossen ist, und mit der insbesondere die Stange aus flachen Gütern oder eine dieselbe nach oben hin abdeckende Zwischenlage in z-Richtung angesaugt und gehalten werden kann. Durch einen solchen Sauggreifer läßt sich besonders einfach und zielgenau eine lösbare Bindung an der Oberseite der entsprechenden Fläche der Stange aus flachen Gütern herstellen. Durch die automatische Kontrolle des erzeugten Unterdrucks und damit der aktuellen Haltekraft kann beim Auspacken von besonders empfindlichen Füllgütern übermäßiger Seitendruck vermieden werden, was der Schonung des Füllgutes entgegenkommt. Die oben beschriebene Druckplatte mit Saugvorrichtung ist an sich bereits aus der oben zitierten DE 197 20 710 C2 bekannt.

Eine weitere bevorzugte Ausführungsform der erfindungsgemäßen Vorrichtung sieht vor, dass das Greifersystem einen Grundkörper aufweist, an welchem die Seitenflügel und gegebenenfalls die Greifbacken und die Druckplatte beweglich angebracht sind, und daß der Grundkörper an seiner im Betriebszustand der Stange aus flachen Gütern zugewandten Seite eine oder mehrere Flächen mit konkaver Kontur aufweist, an die die Stange aus flachen Gütern im gegriffenen Zustand in z-Richtung anstößt. Insbesondere bei der Anwendung des erfindungsgemäßen Greifersystems für die Entnahme von Stangen vorgeklebter, flachliegender Faltschachteln aus ihrer Umverpackung ergibt sich aufgrund der speziellen Struktur des Füllgutes ein undefiniertes, labiles Verhalten, das dazu führt, dass die Faltschachteln aus der Stange nach oben oder unten ausbrechen oder eine S-Form ausbilden. Mit der oben genannten Modifikation des Grundkörpers und der entsprechenden konkaven Kontur läßt sich ein stabiles, definiertes Gleichgewicht bei vorgespannter Stange (sogenannte "Brückenbildung") erreichen, was letztlich zu einem schnelleren Entleerungszyklus durch eine automatisierte Form des erfindungsgemäßen Greifersystems führt.

Um die Flexibilität bei derartigen Ausführungsformen noch zu erhöhen, weist bei einer Weiterbildung der Grundkörper eine Einrichtung zur automatischen Formatanpassung des Greifersystems auf die zu greifenden Stangen aus flachen Gütern auf. Damit kann ohne zeitverzögernden Umbau unmittelbar von der Entladung eines Formats auf die Entladung eines anderen Formats übergegangen werden.

Des weiteren kann auch ein Trennfinger vorgesehen sein, mit welchem vor dem Ergreifen einer Stange aus flachen Gütern ein geeigneter Zwischenraum zwischen der Stange aus flachen Gütern und einer dieselbe umgebenden Umverpackung bzw.Transportverpackung geschaffen werden kann.

Besonders vorteilhaft ist es weiterhin, wenn in Verbindung mit der erfindungsgemäßen Vorrichtung ein vorzugsweise elektronisch gesteuertes Positioniersystem zur automatischen räumlichen Positionierung des Greifersystems vorgesehen ist.

Bei einer Weiterbildung ist das Greifersystem Teil eines automatischen Handhabungs- bzw. Robotersystems zur automatisierten Befüllung und/oder Entnahme von Stangen flacher Güter in bzw. aus einer Umverpackung oder Transportverpackung. Ein derartiges automatisches Handhabungssystem im Zusammenhang mit einer Befüll- und Entnahmeeinrichtung ist beispielsweise beschrieben in der oben zitierten DE 197 20 650 A1. Die Robotersteuerung von Antriebs- und Führungselementen ermöglicht einen besonders flexiblen Einsatz der erfindungsgemäßen Vorrichtung auch bei größeren Unterschieden in der Außengeometrie der zu entleerenden Umverpackungen und der zu entnehmenden Stangen flacher Güter.

Vorteilhafterweise ist bei einer Weiterbildung das Greifersystem vom Handhabungs- bzw. Robotersystem mechanisch, energetisch und ggf. sensorisch abkoppelbar. Damit werden einerseits Reparaturarbeiten am Greifersystem erleichtert, wobei die erfindungsgemäße Vorrichtung mit entsprechenden Austauschteilen unterdessen weiterlaufen kann. Andererseits eröffnet sich damit die Möglichkeit, verschiedenartig ausgelegte Werkzeuge, beispielsweise zum automatischen Öffnen der Umverpackung oder an anderen Stellen des Greifersystems einzusetzen. Dadurch kann das Greifersystem beliebig gegen ein anderes ausgewechselt werden, wodurch verschiedene Formate von Füllgütern einfacher verarbeitbar sind. Außerdem ergibt sich damit die Möglichkeit zur Anwendung eines Tandemverfahrens, bei dem ein bereits befüllter Greifer entladen wird, während gleichzeitig ein leerer befüllt wird, womit sich weitere Zykluszeitgewinne erzielen lassen.

Besonders bevorzugt ist in diesem Zusammenhang eine Weiterbildung, bei der mehrere unterschiedlich ausgelegte Greifersysteme vorgesehen sind, von denen im Betrieb zumindest ein an das Handhabungs- bzw. Robotersystem angekoppelt und zumindest ein Greifersystem vom Handhabungs- bzw. Robotersystem abgekoppelt sind. Dadurch läßt sich ein vollautomatischer Wechsel der Greifersysteme bei Änderungen der Außenkonturen der zu entleerenden Umverpackungen sowie der darin enthaltenen Flachgüter bewirken, ohne daß der Einsatz von lohnintensivem Bedienungspersonal erforderlich wäre.

Bei einer besonders bevorzugten Weiterbildung ist vorgesehen, daß das Handhabungs- bzw. Robotersystem eine Roboterzelle umfaßt, die mit zwei Hauptfunktionssystemen agiert, nämlich einem ersten Achssystem, welches das Greifersystem in den oder aus dem Arbeitsbereich eines zweiten Achssystems bewegt, das ein Öffnen und vorzugsweise auch ein Demontieren einer Umverpackung bzw. Transportverpackung bewirkt, die die zu greifenden Stangen aus flachen Gütern enthält. Dadurch kann auch die Zufuhr der zu öffnenden und demontierenden Umverpackungen vollautomatisch erfolgen. Ebenso können die demontierten Teile der Umverpackung problemlos aus dem Arbeitsbereich des zweiten Achssystems entfernt werden.

Besonders bevorzugt ist eine Ausführungsform der erfindungsgemäßen Vorrichtung, bei der eine Einrichtung zum automatischen Öffnen und vorzugsweise auch Demontieren einer Umverpackung bzw. Transportverpackung vorgesehen ist, die die zu greifenden Stangen aus flachen Gütern enthält. Dadurch können insbesondere die Vorteile der oben beschriebenen Ausführungsformen, vor allem die automatische relative Positionierung besonders gut ausgenutzt werden.

Eine Weiterbildung dieser Ausbildungsform zeichnet sich dadurch aus, daß eine Fördervorrichtung vorgesehen ist, die die Umverpackungen in einem vom Handhabungs- bzw. Robotersystem und/oder vom Positioniersystem vorgegebenen Takt in den Arbeitsbereich des ersten Achssystems zuführen kann, wodurch die Taktzeit der Gesamteinrichtung praktisch auf die Dauer des Öffnungs- und Demontagevorgangs reduziert wird.

Eine Weiterbildung dieser Ausführungsform sieht vor, daß das Handhabungs- bzw. Robotersystem in Synchronisation mit der Entnahme des Füllgutes aus der Verpackung die Seitenflächen und oder die Frontflächen der Verpackung derart verschwenken kann, daß der Entnahmeeinrichtung ein bequemer Zugang in die Verpackung eröffnet wird. Die Synchronisation kann derart eingestellt sein, daß die Demontage der Umverpackung simultan zur Entnahme des Füllgutes erfolgt, oder aber in einem festlegbaren zeitlichen Abstand davor oder danach. Besonders wichtig ist das Zusammenwirken von automatischer Entnahme des Füllgutes und Demontage der Umverpackung bei empfindlichen, direkt an einer Innenwand der Umverpackung anliegenden Güter, insbesondere solcher die unter innerer Spannung stehen, wie zum Beispiel in Stangen flachliegende Faltschachteln mit entsprechenden Rückstellkräften. Je nach Art des Füllgutes kann damit durch gezielte Positionierung der entsprechenden verschwenkten Flächen der Umverpackung mit Hilfe der Einrichtung zum automatischen Öffnen der Umverpackung ein optimaler Zugriff für die Entnahmeeinrichtung auf das Innere der Umverpackung eröffnet werden.

Ein bevorzugtes Ausführungsbeispiel der erfindungsgemäßen Vorrichtung sieht vor, daß an der Bodenfläche der Umverpackung um eine horizontale Anlenkachse verschwenkbare Frontverstärkungsklappen anhängen, die im montierten Zustand an den Frontflächen befestigt, insbesondere verklebt o-der verklammert sind, und daß das Handhabungs- bzw. Robotersystem eine Abtrennvorrichtung zum Lösen der Verstärkungsklappen von den Frontflächen umfaßt. Die Abtrennvorrichtung zum Lösen der Verstärkungsklappen kann insbesondere identisch sein mit der oben erwähnten Auftrenneinrichtung zum Lösen der durch Befestigungsmittel bewirkten festen Verbindung.

Vorteilhaft ist es auch, wenn an den Seitenflächen und/oder an den Frontflächen der Umverpackung eine oder mehrere Deckelklappen vorgesehen sind, die die Verpackung durch Schwenken um eine horizontale Anlenkachse und Befestigen an einer Seitenfläche und/oder einer Frontfläche verschließen, und wenn das Handhabungs- bzw. Robotersystem eine Abtrennvorrichtung zum Lösen der Befestigung der Deckelklappen von den Seiten- und/oder Frontflächen umfaßt. Auch hier wiederum kann die Abtrennvorrichtung identisch mit der oben erwähnten Auftrenneinrichtung sein, wenn die letztere entsprechend universell aufgebaut ist.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig. 1: einen schematischen, teilweise transparenten Vertikalschnitt durch eine Ausführungsform des erfindungsgemäßen Greifersystems beim Ausrichten der zu greifenden Stange aus flachen Gütem in x-Richtung;
- Fig. 2: wie Fig. 1, aber im ergriffenen Zustand der Stange aus flachen Gütern mit angesaugter Zwischenlage;
- Fig. 3: eine räumliche Detailansicht einer Ausführungsform des erfindungsgemäßen Greifersystems schräg von oben beim Eingriff in die geöffnete Umverpackung mit bereits ergriffener Stange aus flachen Gütern;
- Fig. 4: eine räumliche Ansicht einer Ausführungsform des erfindungsgemäßen Greifersystems beim Hereinfahren von oben in einen in einer automatischen Öffnungsstation geöffneten und auseinandergeklappten Umkarton;
- Fig. 5: wie Fig. 4, aber beim Herausfahren des Greifersystems mit ergriffener Stange aus flachen Gütem und darunter angesaugter Zwischenlage;
- Fig. 6: wie Fig. 4, aber beim Ablegen der aus dem Umkarton entfernten Stange aus flachen Gütern auf eine Fördereinrichtung;
- Fig. 7a: eine schematische Seitenansicht einer Ausführungsform des erfindungsgemäßen Greifers beim Ablegen der Stange aus flachen Gütern;
- Fig. 7b: wie Fig. 7a, aber mit in Schuppenform abgelegter Stange aus flachen Gütern beim Abheben des Greifersystems nach oben; und
- Fig. 8: eine räumliche Ansicht einer Ausführungsform des erfindungsgemäßen Greifersystems in der Betriebsphase des erneuten Eintauchens des erfindungsgemäßen Greifersystems in den Umkarton.

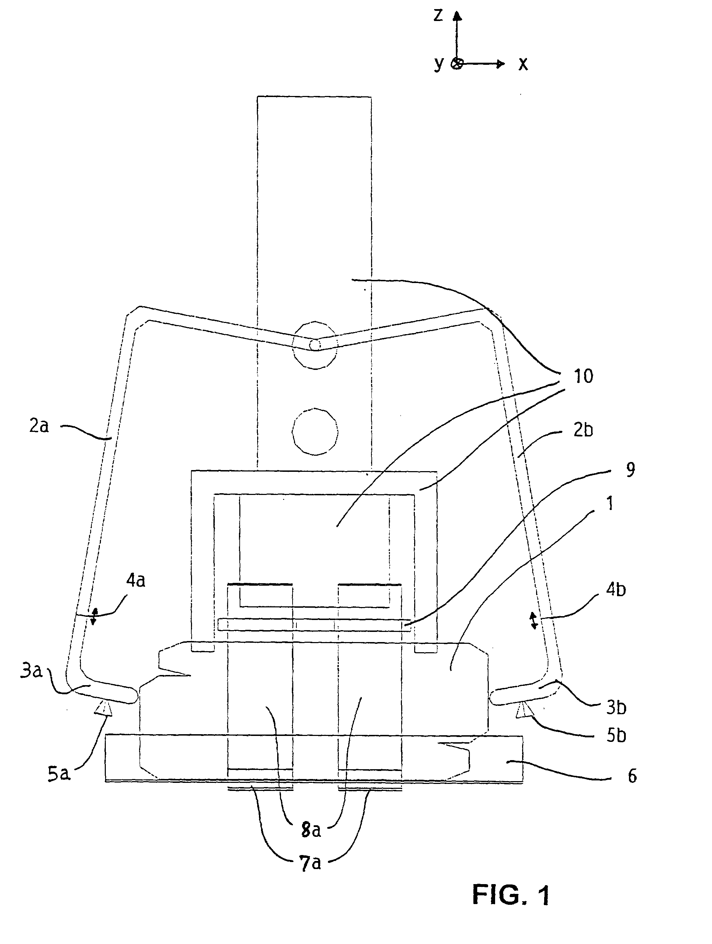

Das in Fig. 1 schematisch dargestellte erfindungsgemäße Greifersystem zum Greifen von flachen, in einer längs einer y-Richtung ausgerichteten, stangenförmigen Aneinanderreihung 1 angeordneten Gütern ― im vorliegenden Beispiel vorgeklebte, flachliegende Faltschachteln ― weist an einem Grundkörper 10 angelenkte Antriebs- und Führungselemente für eine Halteeinrichtung auf, die in y-Richtung, in x-Richtung sowie teilweise in z-Richtung eine definierte Kraft auf die Stange 1 aus flachen Gütern ausüben kann. Im einzelnen umfaßt die Halteeinrichtung ein Paar von bezüglich der y-Achse gegenüberliegend angeordneten Seitenflügel 2a, 2b, welche um eine zur y-Richtung parallele Achse verschwenkbar sind. Mit diesem kann in x-Richtung eine Kraft auf die Stange 1 ausgeübt werden. In der gezeigten Situation wird diese Kraft übertragen durch zwei am unteren Ende der Seitenflügel 2a, 2b angebrachte Haltebacken 3a, 3b, welche mittels einer Verstelleinrichtung 4a, 4b auf unterschiedliche Formate der zu greifenden Güter eingestellt werden können. Außerdem sind die Seitenflügel 2a, 2b unabhängig von den in y-Richtung wirkenden Elementen der Halteeinrichtung längs der z-Richtung linear verfahrbar und in mindestens zwei axialen Stellungen feststellbar.

Eine dieser axialen Stellungen ist in Fig. 1 gezeigt, wo die Stange 1 aus der x-Richtung und der ―x-Richtung zentrisch gerichtet wird.

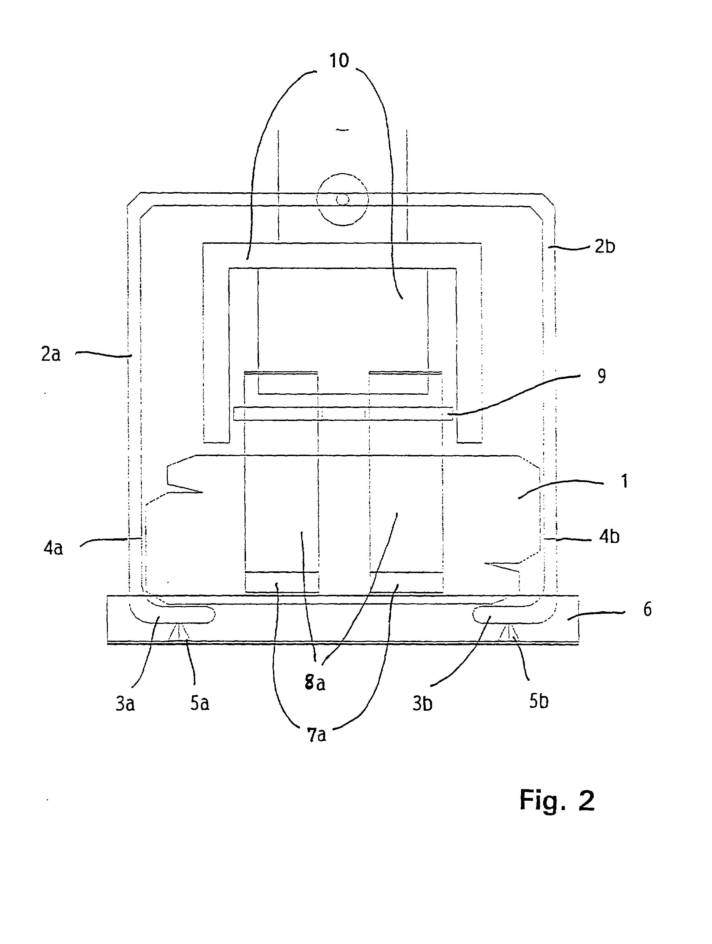

In Fig. 2 sind die Seitenflügel 2a, 2b in einer weiteren axialen Stellung bezüglich der x-Achse dargestellt, in der sie mittels der Haltebacken 3a, 3b die Stange 1 von unten her umgreifen und zusätzlich eine Haltekraft in z-Richtung auf die Stange 1 ausüben, die unabhängig von der in z-Richtung wirkenden Komponente der Gewichtskraft der Stange 1 ist.

Des weiteren umfassen die Seitenflügel 2a, 2b eine in z-Richtung wirkende Greifeinheit, mit der insbesondere eine die Stange 1 aus flachen Gütern nach oben hin abdeckende Zwischenlage 6 gegriffen und gehalten werden kann. Bei dem in den Figuren 1 und 2 dargestellten Ausführungsbeispiel weist die Greifeinheit eine Saugvorrichtung 5a, 5b auf, die an ein System zur Erzeugung von Unterdruck angeschlossen ist, und mit der in der Betriebsposition von Fig. 2 die Zwischenlage 6 von oben her angesaugt werden kann.

Alternativ oder zusätzlich kann die Greifeinheit bei in der Zeichnung nicht dargestellten Ausführungsformen aber auch einen mechanischen Greifer, einen Bohrgreifer, einen Magnetgreifer oder eine andere Art von Greifer umfassen.

Am Grundkörper 10 sind außer den Seitenflügeln 2a, 2b auch noch ein Paar bezüglich der x-Achse gegenüberliegende, in y-Richtung und der entsprechenden Gegenrichtung wirkende Greifbacken 7a, 7b angebracht, die längs der y-Achse linear verfahrbar und in mindestens zwei axialen Stellungen feststellbar sind. Die Greifbacken 7a, 7b weisen in ihrem unteren Bereich Halteteile 8a, 8b auf, welche ihrerseits um eine Achse parallel zur x-Richtung verschwenkbar sind. Die Halteteile 8a, 8b sind um ein nach Art eines Koppelvierecks aufgebautes Hebelwerk verschwenkbar gelagert und unabhängig voneinander verschwenkbar.

Des weiteren ist am Grundkörper 10 eine in z-Richtung linear verfahrbare und/oder um eine Achse parallel zur x-Richtung verschwenkbare Druckplatte 9 vorgesehen, mit der gegen die Stange 1 aus flachen Gütern ein Druck in z-Richtung (genauer gesagt in der entsprechenden Gegenrichtung) ausgeübt werden kann. Bei in der Zeichnung nicht näher dargestellten bevorzugten Ausführungsformen weist die Druckplatte 9 auf ihrer der Stange 1 zugewandten Seite auch noch eine Saugvorrichtung an, mit der eine Saugkraft in z-Richtung ausgeübt werden kann.

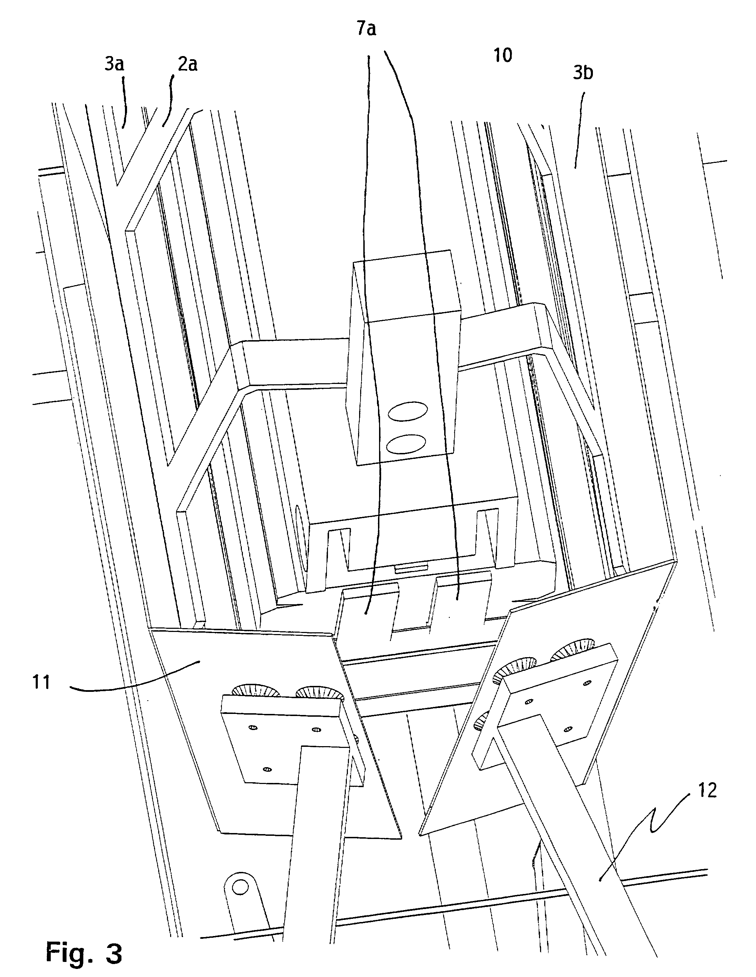

Fig. 3 stellt ein erfindungsgemäßes Greifersystem beim Eingriff in eine Umverpackung 11 dar, aus welchem die Stange 1 in z-Richtung nach oben herausgezogen werden soll. Die Umverpackung 11 wird von Elementen einer Einrichtung 12 zum automatischen Öffnen und vorzugsweise auch Demontieren der Umverpackung 11 auseinandergezogen, so daß das erfindungsgemäße Greifersystem problemlos von oben in die Umverpackung 11 eintauchen kann.

Vorzugsweise ist das erfindungsgemäße Greifersystem an ein in der Zeichnung nicht näher dargestelltes elektronisch gesteuertes Positioniersystem zur automatischen räumlichen Positionierung des Greifersystems angekoppelt. Außerdem ist das Greifersystem Teil eines automatischen Handhabungs- bzw. Robotersystems zur automatisierten Entnahme von Stangen 1 flacher Güter aus einer Umverpackung 11. Das erfindungsgemäße Greifersystem kann mechanisch, energetisch und sensorisch an das Handhabungs- bzw. Robotersystem oder an das Positioniersystem an-, bzw. von diesen abgekoppelt werden.

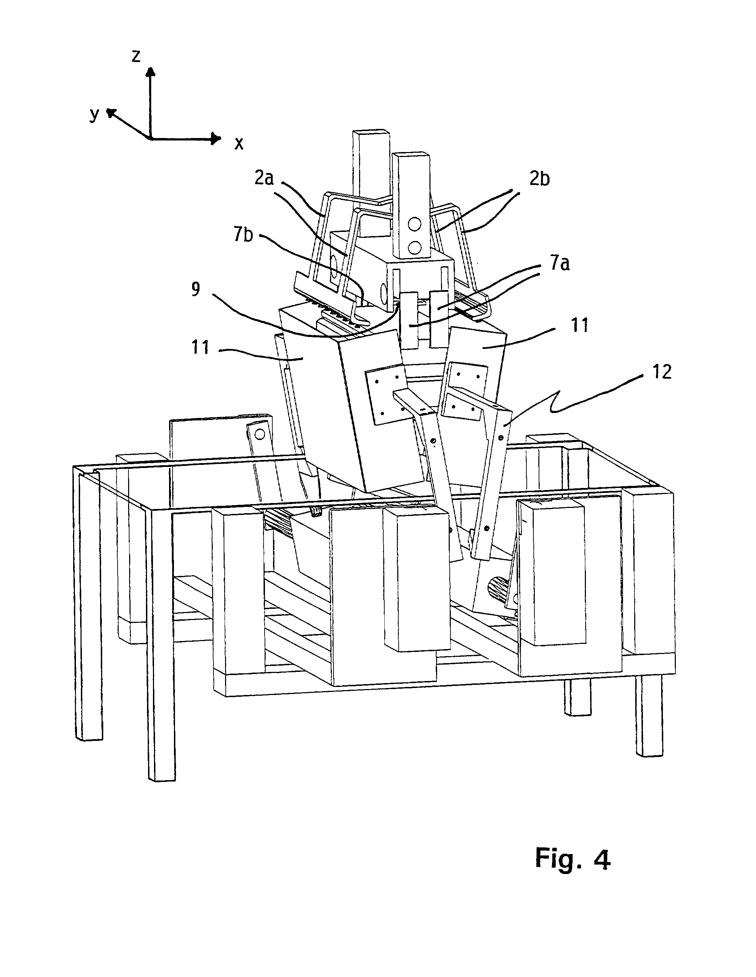

In den Figuren 4 bis 6 und 8 ist das Zusammenwirken des erfindungsgemäßen Greifersystems mit der Einrichtung 12 zum automatischen Öffnen und Demontieren der Umverpackung 11 dargestellt. Das oben erwähnte Robotersystem umfaßt nämlich eine Roboterzelle, die mit mindestens zwei Hauptfunktionssystemen agiert, nämlich einem ersten Achssystem, welches das Greifersystem in den oder aus dem Arbeitsbereich eines zweiten Achssystems bewegt, welches die Einrichtung 12 zum automatischen Öffnen und Demontieren der Umverpackung 11 enthält.

Zum Herausnehmen der Stangen 1 flacher Güter aus der Umverpackung 11 muß die letztere zunächst so weit geöffnet und auseinandergezogen werden, daß sowohl von oben als auch von der Seite ein geeigneter Zugang für das erfindungsgemäße Greifersystem eröffnet wird. Dies kann entweder, wie in den gezeigten Ausführungsbeispielen, durch eine automatische Einrichtung 12 oder in nicht dargestellten Ausführungsbeispielen durch eine geeignet geformte Umverpackung der flachen Güter oder durch die Anwendung von Trennfingern erfolgen, die am Greifersystem angebracht sein können.

In seiner Ausgangsposition befindet sich das erfindungsgemäße Greifersystem in der Grundstellung über der Entnahmeposition. Nachdem die mit den zu entnehmenden Gütern gefüllte Umverpackung in der Einrichtung 12 eingelaufen ist und, wie oben erwähnt, geöffnet wurde, kann der Entnahmevorgang beginnen.

Dazu fährt das erfindungsgemäße Greifersystem von oben her in die Umverpackung 11 ein, wie in Fig. 4 gezeigt ist. Durch lineare Bewegung der Greifbacken 7a, 7b längs der y-Richtung bzw. der -y-Richtung aufeinander zu werden die Faltschachteln der Stange 1 zunächst vorkomprimiert. Danach folgt das bereits in Zusammenhang mit Fig. 1 oben beschriebene zentrische Richten durch entsprechende Anlage der Seitenflügel 2a, 2b aus der x- bzw. -x-Richtung gegen die entsprechenden Seitenflächen der Stange 1. Damit wird die Stange 1 mittig zum gesamten Greifersystem ausgerichtet, wobei durch das Vorkomprimieren mit Hilfe der Greifbacken 7a, 7b ein Herausfallen von einzelnen Faltschachteln aus der Stange 1 verhindert wird.

Während des Richtvorgangs oder danach wird die Faltschachtelstange 1 mit den Greifbacken 7a, 7b stetig weiter komprimiert, bis eine definierte maximale Kompression erreicht ist. Die Stange 1 biegt sich dabei brückenartig nach oben und kommt an einer Unterfläche des Grundkörpers 10 zur Anlage, welche vorzugsweise durch eine konkave Kontur an die Bogenform der Faltschachtel 1 angepaßt ist, so daß ein Herausfallen einzelner Schachteln aus der Stange 1 verhindert wird.

Nun wird das Greifersystem mit der ergriffenen Faltschachtelstange 1 nach oben in z-Richtung angehoben, und die Seitenflügel 7a, 7b gleichzeitig in der Gegenrichtung nach unten gefahren und um die y-Achse gegen die Stange 1 verschwenkt, so daß die Haltebacken 3a, 3b die Stange 1 auch von unten her in z-Richtung umgreifen, wie in Fig. 2 dargestellt ist. Damit ist die Stange 1 von allen Seiten transportgesichert und kann aus der Umverpackung 11 problemlos entnommen und zu einem beliebigen Zielort transportiert werden.

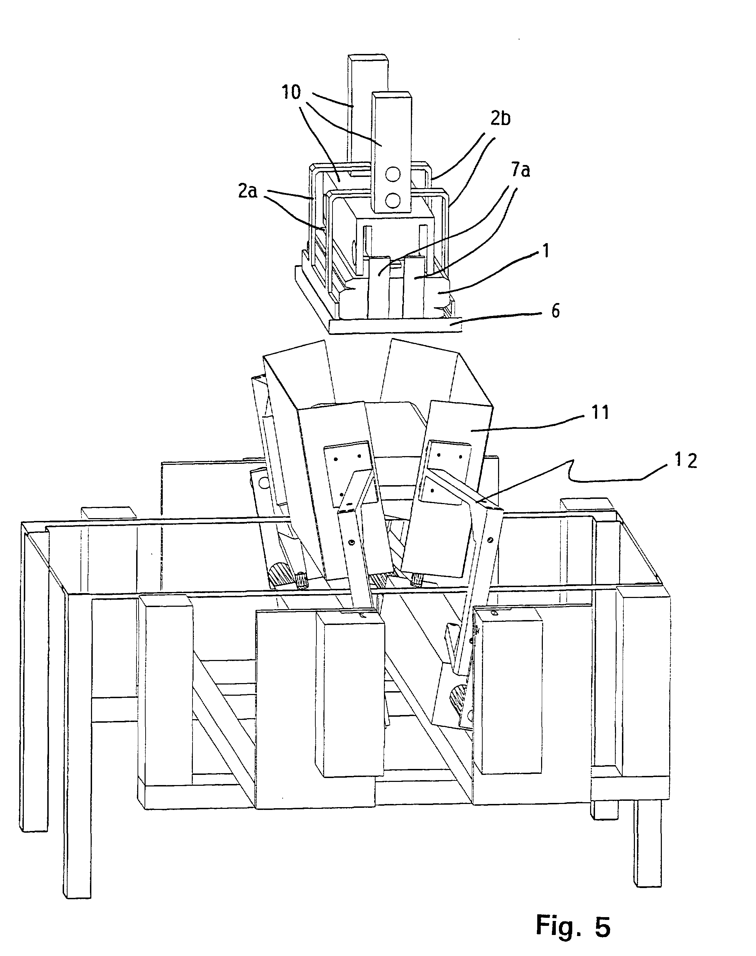

Um aber gleich den Weg von oben her in -z-Richtung auf die nächste Lage von Faltschachteln frei zu machen, wird eine die Lagen üblicherweise voneinander trennende Zwischenlage 6 mittels der oben beschriebenen Saugvorrichtung 5a, 5b angesaugt, ebenfalls aus der Umverpackung 11 entnommen und vom erfindungsgemäßen Greifersystem abtransportiert, wie in Fig. 5 räumlich dargestellt.

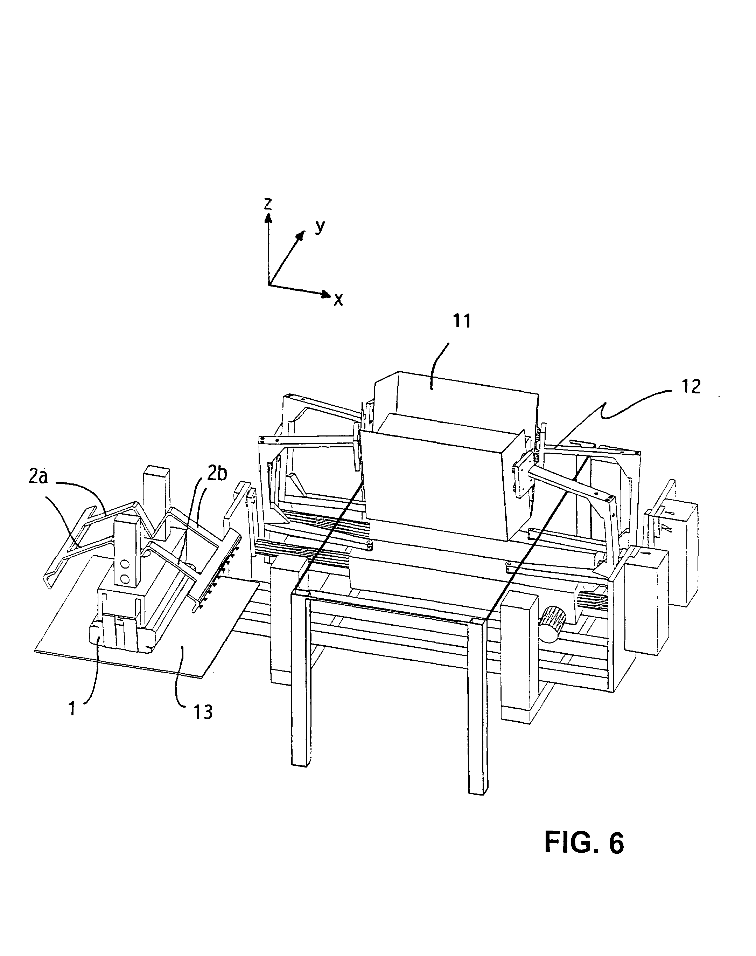

Über einer definierten Ablageposition wird die Zwischenlage 6 abgeworfen, bevor das Greifersystem die entnommene Faltschachtelstange 1 an ihren Zielort, beispielsweise eine Fördervorrichtung 13 transportiert, wo sie dann definiert abgelegt wird, wie in Fig. 6 dargestellt ist.

Dazu werden zunächst die Seitenflügel 2a, 2b um die y-Achse verschwenkt und nach oben aufgeklappt, so daß die Transportsicherung der Stange 1 gelöst ist. Danach wird das Greifersystem in -z-Richtung abgesenkt und die Komprimierung durch Verfahren der Greifbacken 7a, 7b in y- bzw. -y-Richtung gelöst.

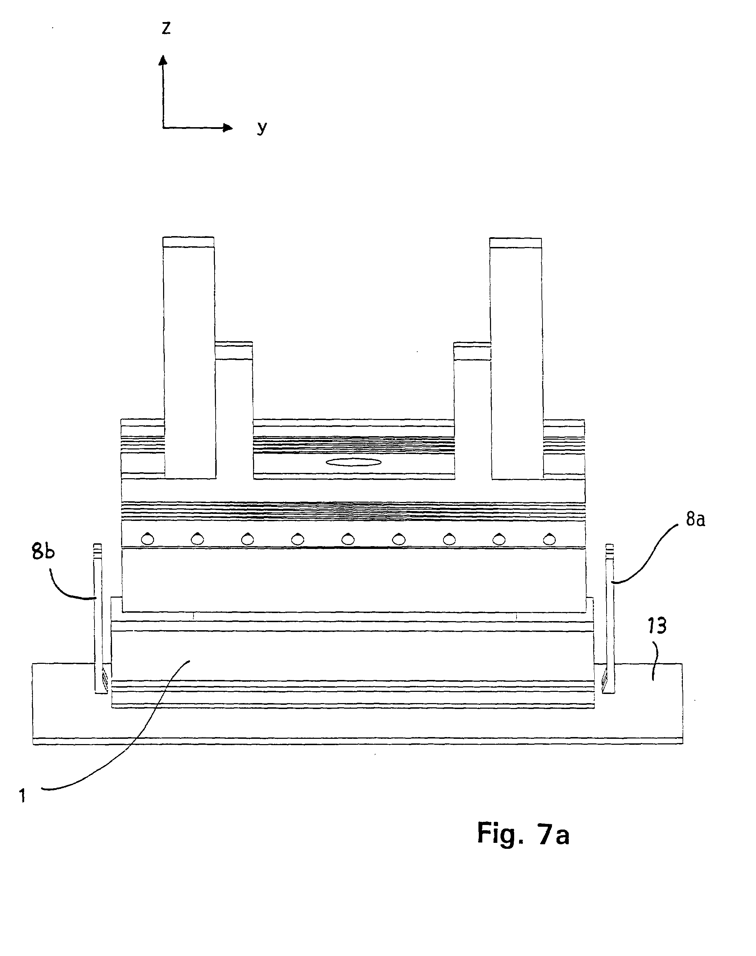

Um aus der Faltschachtelstange 1 eine definiert positionierte Schuppenlage 1' zu erzeugen, werden beim Absetzen der Stange 1 zunächst, wie in Fig. 7a gezeigt, die gegenüberliegenden Halteteile 8a, 8b der Greifbacken 7a, 7b in senkrechter Lage parallel zueinander gehalten.

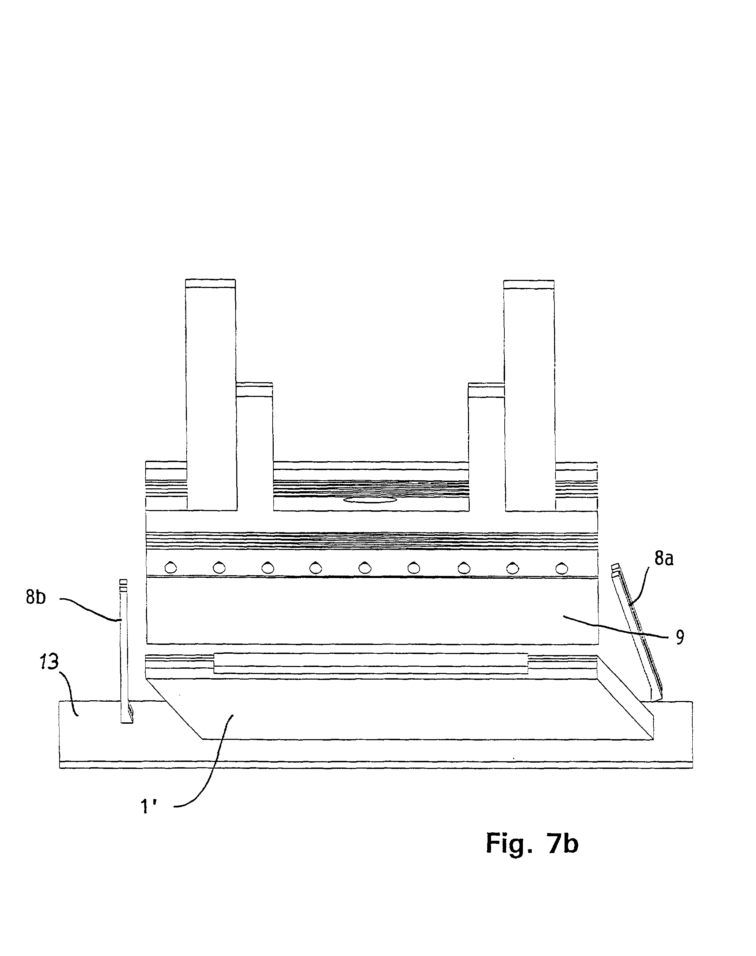

Durch Hochfahren des Greifersystems in z-Richtung und Herunterfahren der Druckplatte 9 in der Gegenrichtung wird die nunmehr lockere Stange 1 auf ihre Ablegeposition gebracht. Wie in Fig. 7b gezeigt, kann nun eine definierte, gewünschte Schuppenrichtung durch beispielsweise unsymmetrisches Betätigen der Halteteile 8a, 8b bewirkt werden, so daß die Faltschachteln aus der Stange 1 nunmehr in einer Schuppenlage 1' in exakt vorgegebener Position und Ausrichtung abgelegt sind.

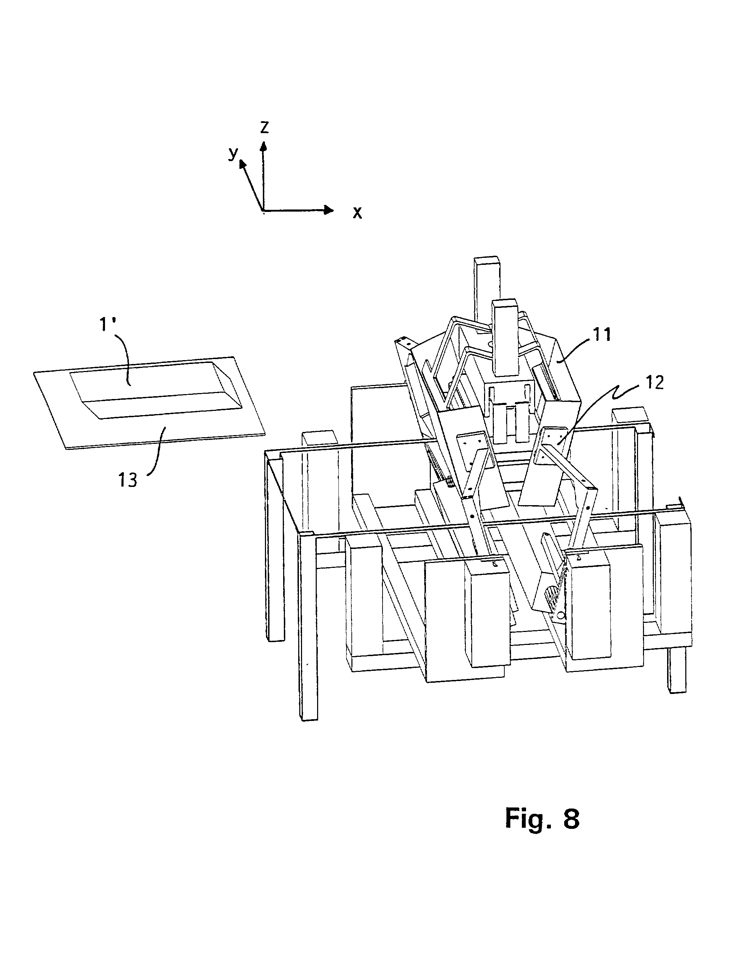

Danach kann das Greifersystem den Entnahmezyklus von neuem beginnen, wie in Fig. 8 gezeigt ist, wo das System wiederum in den geöffneten Umkarton 11 auf der Einrichtung 12 von oben her eingefahren ist, um die nächste Lage von Faltschachteln in Stangenform und ggf. eine weitere Zwischenlage 6 zu entnehmen und abzutransportieren.

## Patentansprüche

1. Greifersystem zum Greifen von flachen, in einer längs einer y-Richtung ausgerichteten, stangenförmigen Aneinanderreihung (1) angeordneten Gütem, insbesondere vorgeklebten, flachliegenden Faltschachteln, mit Antriebs- und Führungselementen für eine Halteeinrichtung, die in y-Richtung und in mindestens einer x-Richtung senkrecht zur y-Richtung eine definierte Kraft auf die stangenförmig aneinander gereihten, flachen Güter ausüben kann, wobei die in y-Richtung wirkenden Elemente der Halteeinrichtung linear parallel zur y-Richtung verfahrbar sind und die in x-Richtung wirkenden Elemente ein Paar von Seitenflügeln (2a,2b) umfassen, die auf zwei gegenüberliegenden Seiten bezüglich einer y-Achse der Vorrichtung angeordnet sind,
**dadurch gekennzeichnet,**
**dass** die Seitenflügel (2a,2b) um eine zur y-Richtung parallele Achse verschwenkbar sind, und nach einem entsprechenden Verschwenken jeweils eine in x-Richtung bzw. in x-Richtung wirkende Kraft auf die Stange (1) aus flachen Gütern ausüben können, dass die Seitenflügel (2a,2b) unabhängig von den in y-Richtung wirkenden Elementen der Halteeinrichtung längs einer zur y- und zur x-Richtung senkrechten z-Achse linear verfahrbar und in mindestens zwei axialen Stellungen längs der z-Richtung feststellbar sind, dass die Seitenflügel (2a,2b) so ausgebildet sind, dass sie auch in z-Richtung eine Kraft auf die Stange (1) aus flachen Gütern ausüben können, welche unabhängig von der in z-Richtung wirkenden Gewichtskraft der Stange (1) aus flachen Gütern ist, und dass die Seitenflügel (2a,2b) eine in z-Richtung wirkende Greifeinheit umfassen, mit der beispielsweise eine die Stange (1) aus flachen Gütern nach oben hin abdeckende Zwischenlage (6) und/oder eine Umverpackung (11) bzw. Transportverpackung und/oder ein Blister gegriffen werden kann.

2. Vorrichtung nach Anspruch 1, **dadurch gekennzeichnet, dass** die Seitenflügel (2a,2b) eine Verstelleinrichtung (4a,4b) für unterschiedliche Formate der zu greifenden flachen Güter aufweisen.

3. Vorrichtung nach Anspruch 1 oder 2, **dadurch gekennzeichnet, dass** die in z-Richtung wirkende Greifeinheit eine Saugvorrichtung (5a,5b) aufweist, die an ein System zur Erzeugung von Unterdruck angeschlossen ist, und mit der insbesondere eine Zwischenlage (6) in z-Richtung angesaugt und gehalten werden kann.

4. Vorrichtung nach Anspruch 3, **dadurch gekennzeichnet, dass** die Greifeinheit zumindest einen mechanischen Greifer aufweist, der insbesondere eine Zwischenlage (6) umfassen und mittels Andruck halten kann.

5. Vorrichtung nach einem der vorhergehenden Ansprüche, **dadurch gekennzeichnet, dass** die in y-Richtung wirkenden Elemente ein Paar von bezüglich der z-Achse gegenüberliegend angeordneten Greifbacken (7a,7b) umfassen, die längs einer y-Achse linear verfahrbar und in mindestens zwei axialen Stellungen bezüglich der y-Richtung feststellbar sind.

6. Vorrichtung nach Anspruch 5, **dadurch gekennzeichnet, dass** die Greifbacken (7a,7b) Halteteile (8a,8b) aufweisen, die um eine Achse parallel zur x-Richtung verschwenkbar sind.

7. Vorrichtung nach Anspruch 6, **dadurch gekennzeichnet, dass** die Halteteile (8a,8b) jedes Greifbackens (7a,7b) gesondert und unabhängig von denen eines anderen Greifbackens (7b,7a) verschwenkbar sind.

8. Vorrichtung nach einem der vorhergehenden Ansprüche, **dadurch gekennzeichnet, dass** eine in z-Richtung linear verfahrbare oder um eine Achse parallel zur x-Richtung verschwenkbare Druckplatte (9) vorgesehen ist, mit der gegen eine gegriffene Stange (1) aus flachen Gütem Druck in z-Richtung ausgeübt werden kann.

9. Vorrichtung nach einem der vorhergehenden Ansprüche, **dadurch gekennzeichnet, dass** das Greifersystem einen Grundkörper (10) aufweist, an welchem die Seitenflügel (2a,2b) und gegebenenfalls die Greifbacken (7a,7b) und die Druckplatte (9) beweglich angebracht sind, und dass der Grundkörper (10) an seiner im Betriebszustand der Stange (1) aus flachen Gütern zugewandten Seite eine oder mehrere Flächen mit konkaver Kontur aufweist, an die die Stange (1) aus flachen Gütern im gegriffenen Zustand in z-Richtung anstößt.

10. Vorrichtung nach einem der vorhergehenden Ansprüche, **dadurch gekennzeichnet, dass** eine Einrichtung (12) zum automatischen Öffnen und vorzugsweise auch Demontieren einer Umverpackung (11) bzw. Transportverpackung vorgesehen ist, die die zu greifenden Stangen (1) aus flachen Gütern enthält.

## Claims

1. Gripping system for gripping flat goods which are lined up (1) next to each other like a rod oriented along a y-direction, in particular, pre-glued flat folded boxes, with driving and guiding elements for a holding means which can exert, in the y-direction and in at least one x-direction perpendicular to the y-direction, a defined force onto the flat goods which are lined up next to each other like a rod, wherein the elements of the holding means, which act in the y-direction, can be displaced linearly parallel to the y-direction, and the elements acting in the x-direction comprise a pair of side wings (2a, 2b) which are disposed on two opposite sides with respect to a y-axis of the device, **characterized in that**
the side wings (2a, 2b) can be pivoted about an axis which is parallel to the y-direction and can exert, after corresponding pivoting, a force in the x-direction or y-direction onto the rod (1) of flat goods, the side wings (2a, 2b) can be linearly displaced along a z-axis, which is perpendicular to the y- and x-direction, independent of the elements of the holding means acting in the y-direction, and can be fixed in at least two axial positions along the z-direction, the side wings (2a, 2b) are formed such that they can exert a force onto the rod (1) of flat goods also in the z-direction, which is independent of the weight of the rod (1) of flat goods acting in the z-direction, and the side wings (2a, 2b) comprise a gripping unit acting in the z-direction with which e.g. an intermediate layer (6) covering the rod (1) of flat goods towards the top and/or a packing (11) or transport packing and/or blister packing can be gripped.

2. Device according to claim 1, **characterized in that** the side wings (2a, 2b) have an adjustment means (4a, 4b) for different formats of the flat goods to be gripped.

3. Device according to claim 1 or 2, **characterized in that** the gripping unit, acting in the z-direction, has a suction device (5a, 5b) which is connected to a system for generating a vacuum and with which, in particular, one intermediate layer (6) can be sucked in the z-direction and can be held.

4. Device according to claim 3, **characterized in that** the gripping unit has at least one mechanical gripper which can embrace, in particular, an intermediate layer (6) and hold it through pressure.

5. Device according to any one of the preceding claims, **characterized in that** the elements acting in the y-direction comprise a pair of gripping jaws (7a, 7b) which are disposed opposite to each other relative to the z-axis and can be linearly displaced along a y-axis and can be fixed in at least two axial positions relative to the y-direction.

6. Device according to claim 5, **characterized in that** the gripping jaws (7a, 7b) have holding parts (8a, 8b) which can be pivoted about an axis parallel to the x-direction.

7. Device according to claim 6, **characterized in that** the holding parts (8a, 8b) of each gripping jaw (7a, 7b) can be pivoted separately and independently of those of another gripping jaw (7b, 7a).

8. Device according to any one of the preceding claims, **characterized in that** a pressure plate (9) which can be linearly displaced in the z-direction or be pivoted about an axis parallel to the x-direction, is provided for exerting a pressure in the z-direction against a gripped rod (1) of flat goods.

9. Device according to any one of the preceding claims, **characterized in that** the gripping system has a base body (10) to which the side wings (2a, 2b) and optionally the gripping jaws (7a, 7b) and the pressure plate (9) are movably mounted and the base body (10) has one or more surfaces of concave contour on its side facing the rod (1) of flat goods in the operating state, on which the rod (1) of flat goods borders in the z-direction in the gripped state.

10. Device according to any one of the preceding claims, **characterized in that** a means (12) for automatic opening and preferably also dismantling a packing (11) or transport packing is provided which contains the rods (1) of flat goods to be gripped.

## Revendications

1. Système de pince pour saisir des articles plats disposés dans un alignement (1) en forme de barre, orienté le long d'une direction y, en particulier des boîtes pliantes précollées, reposant à plat, comprenant des éléments d'entraînement et de guidage pour un dispositif de serrage, qui peut exercer, dans la direction y et dans au moins une direction x perpendiculairement à la direction y, une force définie sur les articles plats, alignés en forme de barre, les éléments du dispositif de serrage agissant dans la direction y pouvant se déplacer de façon linéaire parallèlement à la direction y et les éléments agissant dans la direction x comprenant une paire d'ailes latérales (2a, 2b), qui sont disposées sur deux côtés opposés par rapport à un axe y du dispositif,
**caractérisé en ce que**
les ailes latérales (2a, 2b) peuvent basculer autour d'un axe parallèle à la direction y, et peuvent exercer, après un basculement correspondant, une force respective agissant dans la direction x ou dans la direction y sur la barre (1) d'articles plats, **en ce que** les ailes latérales (2a, 2b) peuvent se déplacer de façon linéaire, indépendamment des éléments du dispositif de serrage agissant dans la direction y, le long d'un axe z perpendiculaire à la direction y et x, et peuvent être bloquées dans au moins deux positions axiales le long de la direction z, **en ce que** les ailes latérales (2a, 2b) sont conçues de telle sorte qu'elles peuvent également exercer sur la barre (1) d'articles plats une force dans la direction z, laquelle est indépendante du poids de la barre (1) provenant des articles plats agissant en direction z, et **en ce que** les ailes latérales (2a, 2b) comprennent une unité de saisie agissant en direction z, avec laquelle par exemple une couche intermédiaire (6) couvrant vers le haut la barre (1) d'articles plats et/ou un emballage secondaire (11) ou un emballage de transport et/ou un habillage transparent peut être saisi(e).

2. Dispositif selon la revendication 1, **caractérisé en ce que** les ailes latérales (2a, 2b) comprennent un dispositif de réglage (4a, 4b) pour différents formats des articles plats à saisir.

3. Dispositif selon la revendication 1 ou 2, **caractérisé en ce que** l'unité de saisie agissant sans la direction z comprend un dispositif d'aspiration (5a, 5b), qui est raccordé à un système générant une dépression, et avec lequel en particulier une couche intermédiaire (6) peut être aspirée et maintenue dans la direction z.

4. Dispositif selon la revendication 3, **caractérisé en ce que** l'unité de saisie comprend au moins une pince mécanique, qui peut comprendre en particulier une couche intermédiaire (6) et la maintenir par pression.

5. Dispositif selon l'une quelconque des revendications précédentes, **caractérisé en ce que** les éléments agissant dans la direction y comprennent une paire de mâchoires de saisie (7a, 7b) opposées par rapport à l'axe z, qui peuvent se déplacer de façon linéaire le long d'un axe y et peuvent être bloquées dans au moins deux positions axiales par rapport à la direction y.

6. Dispositif selon la revendication 5, **caractérisé en ce que** les mâchoires de saisie (7a, 7b) comprennent des pièces de serrage (8a, 8b), qui peuvent basculer autour d'un axe parallèlement à la direction x.

7. Dispositif selon la revendication 6, **caractérisé en ce que** les pièces de serrage (8a, 8b) de chaque mâchoire de saisie (7a, 7b) peuvent basculer de manière séparée et indépendamment de celles d'une autre mâchoire de saisie (7a, 7b).

8. Dispositif selon l'une quelconque des revendications précédentes, **caractérisé en ce qu'**il est prévu une plaque de pression (9) pouvant se déplacer de façon linéaire dans la direction z ou pouvant basculer autour d'un axe parallèlement à la direction x, avec laquelle une pression peut être exercée dans la direction z contre une barre (1) d'articles plats saisie.

9. Dispositif selon l'une quelconque des revendications précédentes, **caractérisé en ce que** le système de pince comprend un corps de base (10), sur lequel sont disposées de façon mobile les ailes latérales (2a, 2b) et éventuellement les mâchoires de saisie (7a, 7b) et la plaque de pression (9), et **en ce que** le corps de base (10) comprend sur son côté tourné vers la barre (1) d'articles plats, en position de fonctionnement, une ou plusieurs surfaces présentant un contour concave, sur laquelle(lesquelles) s'appuie la barre (1) d'articles plats dans la direction z en position saisie.

10. Dispositif selon l'une quelconque des revendications précédentes, **caractérisé en ce qu'**il est prévu un dispositif (12) d'ouverture automatique et de préférence de démontage d'un emballage secondaire (11) ou d'un emballage de transport est prévu, qui contient les barres (1) d'articles plats à saisir.
